Europäisches Patentamt

European Patent Office

Office européen des brevets

(11) Publication number: **0 034 445**
**B1**

(12) **EUROPEAN PATENT SPECIFICATION**

(45) Date of publication of patent specification: **03.07.85**

(51) Int. Cl.⁴: **B 62 M 9/12**

(21) Application number: **81300500.6**

(22) Date of filing: **06.02.81**

(54) **Cycle gear crank.**

(30) Priority: **13.02.80 JP 17289/80**

(43) Date of publication of application:
**26.08.81 Bulletin 81/34**

(45) Publication of the grant of the patent:
**03.07.85 Bulletin 85/27**

(84) Designated Contracting States:
**BE DE FR GB IT**

(56) References cited:
**EP-A-0 008 851**
**GB-A-2 005 778**
**GB-A-2 005 779**

(73) Proprietor: **SHIMANO INDUSTRIAL COMPANY LIMITED**
**77, 3-cho Oimatsu-cho Sakai-shi**
**Osaka (JP)**

(72) Inventor: **Ueno, Tadashi**
**305, 4-2, 3-cho, Shinkanaoka-cho**
**Sakai-shi Osaka (JP)**

(74) Representative: **Szczuka, Jan Tymoteusz et al**
**Cruikshank & Fairweather 19 Royal Exchange Square**
**Glasgow G1 3AE Scotland (GB)**

Courier Press, Leamington Spa, England.

## Description

This invention relates to a gear crank assembly for a cycle, which assembly comprises a plurality of chain wheels of different diameters, each chain wheel having a body and large number of peripherally disposed gear teeth; a crank shaft supporting said chain wheels; and a crank means having a pair of crank arms.

Generally, a gear crank assembly uses one front chain wheel, but it is also very well-known to employ two or more chain wheels having different numbers of teeth, a front derailleur being used to switch a drive chain between said chain wheels, so that a driving force from pedalling can be transmitted to a rear sprocket or multi-speed sprocket assembly on a rear wheel hub of the cycle at different gear ratios.

Since the front chain wheels are relatively large in diameter, it is desirable that they be formed of a lightweight material, such as aluminum, in order to avoid excessive weight. Such lightweight material is however less rigid and has reduced wear-resistance as compared with other heavier materials such as steel. As a result the teeth of chain wheels formed of lightweight material wear out or are broken during gear changing speeds relatively quickly.

When a multi-stage derailleur switches the drive chain from a smaller diameter chain wheel to a larger diameter one, a tooth of the latter adjacent to and rearward of, with respect to the forward direction of rotation of the chain wheels, a chain catching tooth, is contacted obliquely by the drive chain. On the other hand, when the drive chain is switched from the larger diameter chain wheel to the smaller diameter one, it contacts in a twisting manner a tooth of the smaller diameter one adjacent to and forward of, with respect to the forward direction of rotation of the chain wheels, a chain disengaging tooth of the larger diameter chain wheel. These adjacent teeth are thus subjected to a considerable load and stress which result in their wearing down or breaking.

The last-mentioned above problem could of course be overcome by using chain wheels formed of a more rigid and wear resistant material, such as steel but this would result in the disadvantages of increased weight and greater production costs as well as also still resulting in greater wear at certain portions.

The present applicant has previously proposed in EP—A—008851 a chain wheel which is formed of a lightweight material but with selected teeth formed of a more rigid and wear resistant material, such as steel. The selected teeth are those likely to engage the chain when it is switched to the chain wheel with those teeth.

Specifically these selected teeth are those teeth at the position coincident with the engagement point of the chain where the drive chain is about to engage with the teeth of the larger diameter chain wheel when it is being switched from the smaller diameter chain wheel to said larger diameter one. The engagement position is located at a distance corresponding to an integral multiple of the chain pitch from the point where the chain begins to disengage from the smaller diameter chain wheel. However, the positional relationship between the teeth of both the chain wheels changes due to the different numbers of teeth thereof, whereby the point which engages with the larger diameter chain wheel when the chain is moved thereto may or may not engage the tips of teeth of the larger diameter chain wheel depending upon the position of the disengagement point/tooth on the smaller chain wheel.

The chain has a number of opportunities for engagement of teeth of the toothed member provided at positions where the teeth engage with the chain cavity, but there is no guarantee of engagement with such teeth. Thus the drive chain may still often engage the lightweight teeth instead of the more rigid ones so that the problems of wearing and breaking of teeth still remain.

It has also previously been proposed by the present applicant in GB—A—2005779 to provide a gear crank assembly for a cycle which assembly comprises a plurality of chain wheels of different diameters, each chain wheel having a body and a large number of peripherally disposed gear teeth, at least some of said gear teeth on a larger said chain wheel being formed for easy engagement with a drive chain, during switching of the chain from the smaller to the larger diameter chain wheel; a crank shaft supporting said chain wheels; and a crank means having a pair of crank arms.

In this case all the teeth are of conventional lightweight material so that the problem of wearing and breaking of teeth is also present.

It is an object of the present invention to avoid or minimize one or more of the above disadvantages.

In general, the gear crank assembly comprising the chain wheels and crank means, generates a driving force during pedalling, which force is transmitted to the rear wheel sprocket(s) via a drive chain. The driving force reaches a minimum value when the crank arms are substantially vertical i.e. in proximity to the dead points of the gear crank assembly, and at this stage the drive chain is subjected to a minimum load. The front derailleur (which shifts the drive chain axially relative to the chain wheels) is usually mounted above the crank shaft, in other words, in proximity to the upper dead point of the crank arm. As a result, chain switching occurs in proximity to the upper dead points of the crank arms and tends to take place when the crank arms are at their dead points so that only a minimum load is being applied to the chain.

The inventor has observed the above phenomena and found, after investigation, that the drive chain tends to be switched from one chain wheel to another within a sector extending from 15 to 30° forward and 60° rearward, with respect to the forward direction of rotation of the crank assembly, of the upper dead point of the crank arm, in the case of each of the crank arms.

Accordingly the present invention provides a gear crank assembly for a cycle, which assembly comprises a plurality of chain wheels of different diameters, each chain wheel having a body and a large number of peripherally disposed gear teeth, at least some of said gear teeth on a larger said chain wheel being formed for easy engagement with a drive chain, during switching of the chain from the smaller to the larger diameter chain wheel; a crank shaft supporting said chain wheels; and a crank means having a pair of crank arms, characterized in that:

a larger diameter chain wheel of said plurality of chain wheels has a plurality of teeth disposed within sectors each of which extends through an angle having a value of from 15° to 30° forward and an angle of 60° rearward, with respect to the forward direction of rotation of the crank assembly, of a respective one of the crank arms at least some of said teeth in said sectors being formed of a material having a greater rigidity and wear resistance than that of the material of said body of said larger diameter chain wheel, and said at least some teeth being formed for easy engagement with said drive chain in use of the gear crank.

Preferably the more rigid and wear resistant teeth are provided in tooth members which are formed of a more rigid material, the chain wheel body being partially cut away to accommodate the toothed members. All the teeth of the larger diameter chain wheel within the above sectors may be formed of the more rigid material, but this is not essential. Thus a plurality of teeth in these sectors could be formed of the more rigid material, with a plurality of residual teeth being formed integrally with the chain wheel body so as to be of easy disengagement type.

The teeth of the easy engagement type, as will be further described hereinbelow, are inclined at their tips obliquely with respect to a central longitudinal axis of the teeth or displaced laterally at their tips from the central longitudinal axis towards the smaller diameter chain wheel, so that the drive chain, when it is switched from the smaller diameter chain wheel to the larger diameter one, engages preferentially with the easy engagement-type teeth.

The easy disengagement-type teeth are truncated at their tips and thus are of reduced height or are partially cut-away so that the tips are displaced laterally away from the smaller diameter chain wheel, whereby when the drive chain is switched from the larger diameter chain wheel to the smaller diameter one, it disengages preferentially from the easy disengagement-type teeth.

By providing the more rigid and wear resistant material teeth (hereinafter referred to as the "rigid teeth" for convenience) within the above specified sectors and having said rigid teeth formed for easy engagement with the chain, or for easy engagement with and easy disengagement from the chain, it is made more certain that chain switching will take place at said rigid teeth so that the problems of wearing and breaking down of the teeth are substantially minimized and the chain gear can be reduced in weight. Moreover the rigid easy engagement and disengagement type teeth enable the drive chain to be quickly and precisely switched, whereby the overall efficiency of the gear crank assembly of the invention is improved.

Further preferred features and advantages of the invention will appear from the following description given by way of example of some preferred embodiments illustrated with reference to the accompanying drawings, in which:

Fig. 1 is a partially cutaway side view of a first gear crank assembly of the invention;

Fig. 2 is a partial radial section of the assembly of Fig. 1 shown on an enlarged scale;

Fig. 3 is a view of a part of a larger diameter chain gear; and

Figs. 4 to 6 are corresponding views of alternative forms of the larger diameter chain wheel.

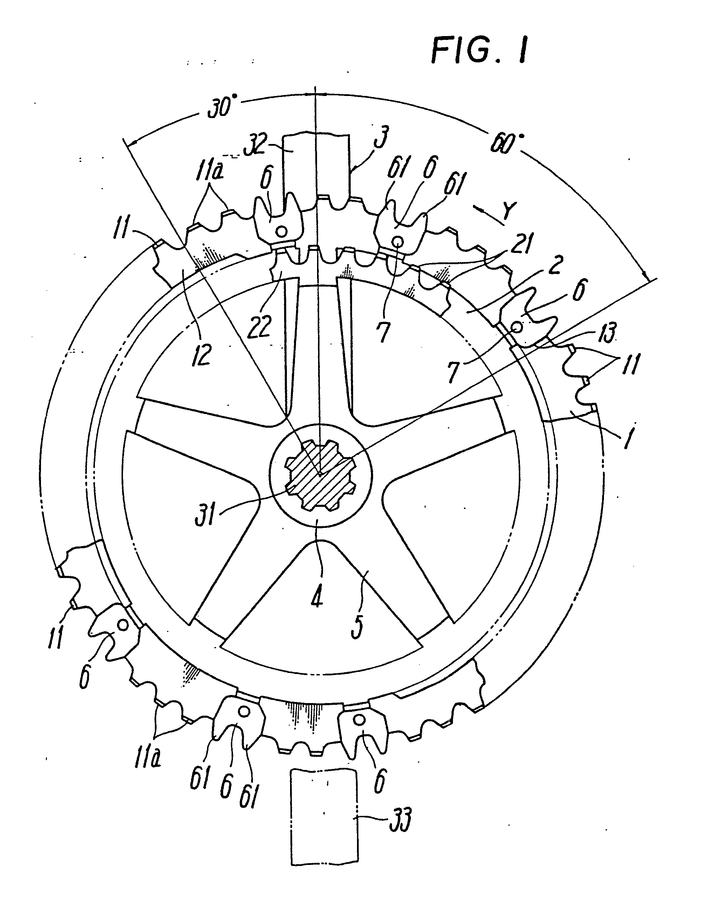

Fig. 1 shows a first gear crank assembly of the invention comprising a plurality of chain wheels 1 and 2 with different diameters and a crank means 3 supporting said chain wheels 1 and 2. Specifically a larger diameter chain wheel 1 having a larger number of teeth and a smaller diameter chain wheel 2 having also a large, but smaller, number of teeth, are supported in parallel axially spaced apart disposition on a crank shaft 31.

The chain wheels 1 and 2 comprise annular bodies 12 and 22 having at their outer peripheries large numbers of gear teeth 11 and 21 respectively, and being connected to a central boss 4, which boss 4 has a mounting bore for receiving therethrough the crank shaft 31, via a plurality of connecting limbs 5 which extend radially outwardly from said boss 4. The chain wheel annular bodies 12, 22, boss 4, and connecting limbs 5, are all formed mainly of a lightweight material, such as an aluminum alloy, and formed integrally with each other by die casting.

Alternatively, instead of the chain wheel annular bodies 12, 22 being formed integrally with the connecting limbs 5, they could be formed separately and secured to the connecting bars 5 by fixing means, such as screws or bolts.

The crank means 3 is substantially conventional and comprises the crank shaft 31 and a pair of crank arms 32 and 33 fixed at respective axial ends of the crank shaft 31. The crank arms 32 and 33 are rotationally displaced from each other by an angle of 180°, extend radially outwardly from the crank shaft 31, and, in use, are provided with pedals (not shown) at their distal ends.

The crank arms 32 and 33 may be formed integrally with the crank shaft 31, but are conveniently formed separately therefrom and secured thereto for rotation together therewith, via a splined connection, and are held in position fixed thereto by fixing means, such as bolts and/or nuts etc.

The boss 4 of chain wheels 1 and 2, in the case where the crank arms 32 and 33 are formed integrally with the crank shaft 31, is connected thereto through a connecting portion formed at the radially inward end of the crank arm 32 or 33, and when the crank arms 32 and 33 are formed separately from the crank shaft 31, the boss 4 is secured to the crank shaft 31 via a splined connection secured in position thereon together with the crank arm 32 or 33.

The gear crank assembly construction as described above so far is well-known, and will therefore be readily understandable by those skilled in the art without further detailed description.

According to the present invention the larger diameter chain wheel 1 of the above gear crank assembly has, however, at least some teeth amongst the large number of teeth 11 of said larger diameter chain wheel 1, which are located within a particular sector to be hereinafter described and which are partially or wholly formed of a material, such as iron or steel, which material is superior to the lightweight material of the body 12 in rigidity, said at least some teeth also being formed for easy engagement with a drive chain.

The abovementioned sectors, as shown in Fig. 1 include, in each case, an angle such that the sector extends 30°, preferably 15° forward and 60° rearward, with respect to the forward direction of rotation of the crank assembly, of the respective crank arm 32, 33, i.e. of respective points on opposite sides of the chain wheel 1, which points are coincident in each case with the dead point where the respective crank arm 32, 33 is disposed vertically so that the driving force from pedalling is at a minimum.

Within the above defined sectors, the pedalling force weakens and the driving force transmitted to the drive chain through the teeth positioned within these sectors is therefore reduced. The front derailleur (not shown) is also normally disposed in proximity to the upper dead point of the crank assembly so that when the gear teeth within the above sectors arrive at the derailleur the chain is easily shifted by the derailleur regardless of any condition for changing speed.

More specifically, a number of tooth positions within the above mentioned sectors are left vacant and the body 12 is cut away on the side facing the smaller diameter chain wheel 2 to a given depth radially inwardly from the outer periphery of the body 12 to provide a toothed member mounting portion 13. A toothed member 6 formed of the more rigid material and bearing a number of teeth corresponding to those omitted at the vacant tooth positions is fitted into the mounting portion 13 and secured in position thereat by fixing means 7, such as screws or bolts.

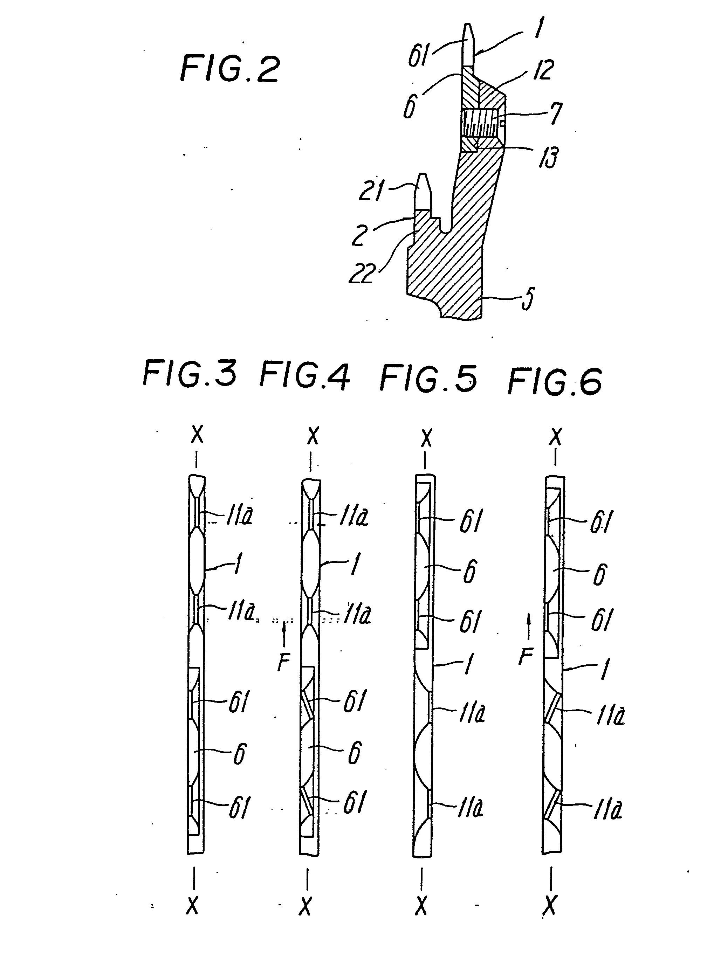

As may be seen in Fig. 1, six of the thirteen tooth positions within the above mentioned sector are occupied by the more rigid teeth which are arranged in groups of two spaced at intervals of two or three teeth. Thus three toothed members 6 each having two relatively rigid teeth 61 are secured in three mounting portions. As may also be seen (see especially Fig. 3), the more rigid teeth 61 are formed for easy engagement with the drive chain (not shown) whilst the seven residual lightweight teeth 11a are formed for easy disengagement from the drive chain.

Alternatively, all the tooth positions within the above mentioned sectors may be of the more rigid type 61, or a plurality of toothed members 6 each having two or more rigid teeth 61 may be mounted on the body 12 two or three teeth apart respectively.

The more rigid teeth 61 of the easy engagement type on the larger diameter chain gear 1, as shown in Figs. 2 and 3, are made smaller in thickness (axially of the chain wheel) than the lightweight teeth 11 outside the sectors and are displaced, axially of the chain wheel, towards the smaller diameter chain wheel 2 with respect to a central line $X—X$ in the plane of the chain wheel and through those teeth in the normal (non-displaced) tooth positions, so that the drive chain is easy to engage with the more rigid teeth 61 when it is switched from the smaller diameter chain wheel 2 to the larger diameter one 1.

Alternatively, the more rigid teeth 61 of the easy engagement type could, as shown in Fig. 4, be inclined obliquely at their tips along the length of said tips with respect to the central line $X—X$ of the normal teeth (for example as if the tips of the teeth had been twisted out of alignment with the plane of the chain wheel) and with their leading ends with respect to the forward direction of rotation $F$ of the chain wheel body inclined towards the smaller diameter chain wheel 2. In this case it is even more effective to form the leading ends of the tooth tips so that they project laterally outwardly from one side of the chain wheel 1. Furthermore, the more rigid laterally displaced teeth 61 shown in Fig. 3 could be displaced even further so as to project laterally outwards from one side of the chain wheel towards the smaller diameter chain wheel opposite thereto.

The residual (lightweight) teeth 11a in the sectors, which teeth are formed for easy disengagement from the chain, are, as shown in Fig. 1, reduced in height as compared with the normal teeth 11, could instead be displaced at their tips laterally away from the smaller chain wheel 2 and away from the central line $X—X$ of the normal teeth as shown in Fig. 5, or may be inclined obliquely at their tips along the length of said tips with respect to the aforesaid central line $X—X$ so that their leading ends with respect to the forward direction of rotation of the chain wheel 1 are inclined away from the smaller diameter chain wheel 2 as shown in Fig. 6.

The normal teeth 11 of the larger diameter chain wheel 1 positioned outside of the above mentioned sectors are not formed as easy engagement or disengagement type teeth but have a well-known standard type of configuration with the tips of said teeth aligned with the central line $X—X$ in the plane of the chain wheel and with conventional height, thereby providing relatively difficult chain switching thereat — at least in comparison with the teeth within the above mentioned sectors. The reason for this is that the teeth 11 not only have the standard form but are also transmitting a larger driving force to the chain when they are in a position in which the drive chain engaged or to be engaged therewith is within the operating zone of the derailleur, whereby a greater switching is subjected to a greater resistance force.

In the above described gear crank assembly of the invention, when the chain is switched from the smaller diameter chain wheel 2 to the larger diameter one 1, the front derailleur positioned generally vertically above the crank shaft 31 is operated to bias and shift the chain via a chain guide of the derailleur (not shown) towards the larger diameter chain wheel 1, so that the chain is switched from the smaller diameter chain wheel 2 to the larger diameter one 1, whilst the crank arms 32 and 33 are being rotated by pedalling and the chain is travelling around the gear crank assembly.

When the crank arms 32 and 33 are rotated, by pedalling, to a vertical position — at the upper and lower dead points — the more rigid above mentioned sectors come within the operating zone of the derailleur. In other words, at the upper dead point where a minimum driving force from a minimum pedalling effort is being transmitted to the drive chain from the teeth of the chain wheels, the drive chain is engaged with the more rigid teeth 61 whilst it is being subjected to the biasing and shifting action of the chain guide. Therefore, the drive chain is subjected to a reduced load and can be readily shifted near the upper dead point of the crank arm 32. Also, the more rigid teeth 61, which are formed for easy engagement, can quickly engage with the drive chain to complete switching of the drive chain to the larger diameter chain wheel 1.

At this stage a more rigid tooth 61, if positioned adjacent to a first chain catching more rigid tooth 61 and rearward thereof with respect to the forward direction of rotation (the arrow $Y$ direction in Fig. 1) of the chain wheel 1, is not broken even when it is subjected to a large load from the drive chain. On the other hand, if a lightweight tooth 11a of the easy disengagement type is positioned similarly i.e. behind the more rigid tooth, a load from the drive chain is not concentrated on the tooth 11a due to the fact that the tooth 11a is of only reduced height or the front end of its tip in the rotation direction of chain gear 1 is inclined away from the smaller diameter chain wheel 2. As a result, the lightweight tooth 11a is effectively protected against breakage. Of course the safest option would be to have all the teeth within the above mentioned sectors made from the more rigid material.

The drive chain, when it is switched from the larger diameter chain wheel 1 to the smaller diameter chain wheel 2, is shifted towards the chain wheel 2 similarly to the first case described above so that the more rigid teeth 61 and the lightweight teeth 11a of the easy disengagement type within the above mentioned sectors when the crank arms 32 and 33 reach their dead points, are disposed within the operating zone of the derailleur. Therefore, the drive chain is shifted under a reduced load similarly to the case described above and easily disengages from the lightweight teeth 11a, to be switched to the smaller diameter chain wheel 2.

At this stage a more rigid tooth 61, if positioned adjacently to the lightweight chain disengaging tooth 11a and forward thereof with respect to the forward direction of rotation of the chain wheel 1, is protected against breakage even when it is subjected to the load from the drive chain. Also, a tooth just before the tooth 11a in the same direction, if formed for easy disengagement, is protected against breakage even when it is formed of the same, lightweight, material as the body 12.

In addition, it is of course also possible for all the teeth within the above specified sectors to be formed of a said more rigid material, only some of said rigid teeth being formed for easy engagement with the chain, the residual rigid teeth being formed for easy disengagement from the chain.

As will be apparent from the above, the gear crank assembly of the invention provides chain wheels formed substantially of a lightweight material, such as aluminum, thereby minimizing overall weight, and also substantially overcomes the problems of wearing and/or breakage of the teeth of the larger direction chain wheel during chain switching.

**Claims**

1. A gear crank assembly for a cycle, which assembly comprises a plurality of chain wheels (1, 2) of different diameters, each chain wheel (1, 2) having a body (12, 22) and a large number of peripherally disposed gear teeth (11, 21), at least some of said gear teeth (61) on a larger said chain wheel (1) being formed for easy engagement with a drive chain, during switching of the chain from the smaller (2) to the larger (1) diameter chain wheel; a crank shaft (31) supporting said chain wheels (1, 2); and a crank means having a pair of crank arms (3, 33), characterized in that:

a larger diameter chain wheel (1) of said plurality of chain wheels (1, 2) has a plurality of teeth (11a, 61) disposed within sectors each of which extends through an angle having a value of from 15° to 30° forward and an angle of 60° rearward, with respect to the forward direction of rotation of the crank assembly, of a respective one of the crank arms (3, 33), at least some (61) of said teeth (11a, 61) in said sectors being formed of a material having a greater rigidity and wear resistance than that of the material of said body (12) of said larger diameter chain wheel (1), and said at least some teeth (61) being formed for easy engagement with said drive chain in use of the gear crank.

2. A gear crank assembly according to Claim 1, wherein all the teeth (11a, 61) within said sectors of said larger diameter chain wheel (1) are formed of a said more rigid and wear resistant material, but wherein only some of the teeth within said sectors are formed for easy engagement with a said drive chain, a plurality of residual teeth (11a) within said sectors being formed for easy disengagement from said drive chain.

3. A gear crank assembly according to Claim 1, wherein only some (61) of the teeth (11a, 61) within said sectors of said larger diameter chain wheel (1) are formed of said more rigid and wear resistant material and are formed for easy engagement with a drive chain in use of the assembly, a plurality of the residual teeth (11a) being formed integrally with the body (12) of said larger diameter chain wheel (1) and being formed for easy disengagement from said drive chain.

4. A gear crank assembly according to Claim 3, wherein is provided in each of said sectors a plurality of groups (6) each of which groups (6) comprises a plurality of said more rigid and wear resistant material teeth (61).

5. A gear crank assembly according to Claim 3 or Claim 4 wherein is provided in each of said sectors a plurality of toothed members (6) of a said more rigid and wear resistant material, each of said toothed members (6) having a plurality of teeth (61).

6. A gear crank assembly according to Claim 4 or Claim 5 wherein said groups or toothed members (6) are spaced apart from each other at intervals of at least two teeth (11a).

7. A gear crank assembly according to Claim 6 wherein at least some of said groups or toothed members (6) are spaced apart from each other at intervals of three teeth (11a).

8. A gear crank assembly according to any one of Claims 1 to 7 wherein said more rigid and wear resistant material teeth (61) are detachably mounted on the body (12) of said larger diameter chain wheel (1).

## Revendications

1. Dispositif de pédalier à changement de vitesse pour bicyclette, ce dispositif comprenant une pluralité de roues de chaîne (1, 2) de diamètres différents, chaque roue de chaîne (1, 2) comportant un corps (12, 22) et un grand nombre de dents d'engrènement (11, 12) disposées à la périphérie, au moins certaines des dites dents (61) sur une roue de chaîne (1) de plus grand diamètre étant profilées pour un engagement facile avec une chaîne d'entraînement, lors du transfert de la chaîne de la roue de chaîne (2) de plus petit diamètre à la roue de chaîne (1) de plus grand diamètre; un arbre de pédalier (31) supportant les dites roues de chaînes (1, 2); et une manivelle portant deux bras de manivelle (3, 33), caractérisé en ce qu'une roue de chaîne de plus grand diamètre (11) de ladite pluralité de roues de chaîne (1, 2) comporte un pluralité de dents (11a, 61) disposées à l'intérieur de secteurs dont chacun s'étend sur un angle de 15° à 30° vers l'avant et un angle de 60° vers l'arrière, avec référence au sens de rotation vers l'avant du pédalier, par rapport à un bras de manivelle (3, 33) respectif, au moins certaines (61) des dites dents (11a, 61) dans

les dits secteurs étant fabriquées en une matière de rigidité et de résistance à l'usure supérieures à celles de la matière du corps (12) de la roue de chaîne (1) de plus grand diamètre, et au moins certaines desdites dents (61) ayant une configuration qui permet leur engagement facile avec la chaîne d'entraînement lors du fonctionnement du pédalier.

2. Dispositif de pédalier suivant la revendication 1, dans lequel toutes les dents (11a, 61) situées dans les dits secteurs de la roue de chaîne (1) de plus grand diamètre sont fabriquées en une dite matière plus rigide et résistante, mais dans lequel seulement certaines des dents à l'intérieur de ces secteurs sont prévues pour l'engagement facile avec une chaîne d'entraînement, une pluralité de dents restantes (11a) dans ces secteurs étant prévues pour le dégagement facile de la chaîne d'entraînement.

3. Dispositif de pédalier suivant la revendication 1, dans lequel seulement certaines (61) des dents (11a, 61) dans les dits secteurs de la roue de chaîne (1) de plus grand diamètre sont en matière plus rigide et résistante à l'usure et sont prévues pour l'engagement facile avec une chaîne d'entraînement lors de l'utilisation du dispositif, une pluralité des dents restantes (11a) étant formées solidairement avec le corps (12) de la roue de chaîne (1) de plus grand diamètre et étant prévus pour le dégagement facile de la chaîne d'entraînement.

4. Dispositif de pédalier suivant la revendication 3, dans lequel il est prévu une pluralité de groupes (6) dans chacun des dits secteurs, chacun de ces groupes (6) comprenant une pluralité de dents (61) plus rigides et résistantes à l'usure.

5. Dispositif de pédalier suivant la revendication 3 ou la revendication 4, dans lequel il est prévu dans chacun des dits secteurs une pluralité d'éléments dentés (6) en matière plus rigide et résistante à l'usure, chacun de ces éléments dentés (6) comportant une pluralité de dents (61).

6. Dispositif de pédalier suivant la revendication 4 ou la revendication 5, dans lequel les groupes ou éléments dentés (6) sont espacés les uns des autres à intervalles d'au moins deux dents (11a).

7. Dispositif de pédalier suivant la revendication 6, dans lequel au moins certains des groupes ou éléments dentés (6) sont espacés les uns des autres à intervalles de trois dents (11a).

8. Dispositif de pédalier suivant l'une quelconque des revendications 1 à 7, dans lequel les dents (61) en matière plus rigide et résistante à l'usure sont montées de façon amovible sur le corps (12) de la roue de chaîne (1) de plus grand diamètre.

## Patentansprüche

1. Tretkurbelanordnung für ein Fahrrad, bestehend aus einer Anzahl von Kettenrädern (1, 2) unterschiedlichen Durchmessers, von denen jedes Kettenrad (1, 2) einen Körper (12, 22) und eine Vielzahl von am Umfang angeordneten Zähnen (11, 21) aufweist, wobei mindestens einige der Zähne (61) eines größeren Kettenrades (1) eine den Eingriff in eine Antriebskette beim Schalten der Kette vom kleineren (2) zum größeren (1) Kettenrad begüngstigende Formgebung aufweisen, einer die Kettenräder (1, 2) tragenden Kurbelwelle (31) und einer Kurbel mit einem Paar von Kurbelarmen (3, 33), dadurch gekennzeichnet, daß von den Kettenrädern (1, 2) ein Kettenrad (1) größeren Durchmessers innerhalb von Sektoren, die sich von je einem der Kurbelarme (3, 33) aus über einen Winkel von 15° bis 30° nach vorn und über einen Winkel von 60° nach hinten bezüglich der Vorwärtsdrehrichtung der Tretkurbelanordnung erstrecken, eine Anzahl von Zähnen (11a, 61) aufweist, von denen mindestens einige (61) dieser Zähne (11a, 61) in diesen Sektoren aus einem Material mit größerer Härte und Verschleißfestigkeit als das Material des Körpers (12) dieses Kettenrades größeren Durchmessers bestehen, und daß mindestens einige Zähne (61) eine den Eingriff in die Antriebskette bei Betrieb der Tretkurbelanordnung begünstigende Formgebung haben.

2. Tretkurbelanordnung nach Anspruch 1, dadurch gekennzeichnet, daß sämtliche Zähne (11a, 61) innerhalb der Sektoren des Kettenrades (1) größeren Durchmessers aus dem Material mit größerer Härte und Verschleißfestigkeit bestehen, jedoch nur einige der Zähne innerhalb der Sektoren eine den Eingriff in die Antriebskette begünstigende Formgebung aufweisen, während eine Anzahl der übrigen Zähne (11a) innerhalb dieser Sektoren eine die Freigabe der Antriebskette begünstigende Formgebung aufweisen.

3. Tretkurbelanordnung nach Anspruch 1, dadurch gekennzeichnet, daß nur einige (61) der Zähne (11a, 61) innerhalb der Sektoren des Kettenrades (1) größeren Durchmessers aus dem härteren und verschleißfesteren Material bestehen und eine den Eingriff in die Antriebskette bei Betrieb der Tretkurbelanordnung begünstigende Formgebung aufweisen, und daß eine Vielzahl von restlichen Zähnen (11a) einstückig mit dem Körper (12) des Kettenrades (1) größeren Durchmessers ausgebildet sind und eine die Freigabe der Antriebskette begünstigende Formgebung aufweisen.

4. Tretkurbelanordnung nach Anspruch 3, dadurch gekennzeichnet, daß in jedem der Sektoren eine Anzahl von Gruppen (6) vorgesehen ist, von denen jede Gruppe (6) eine Vielzahl der Zähne (16) aus härterem und verschleißfesterem Material umfaßt.

5. Tretkurbelanordnung nach Anspruch 3 oder 4, dadurch gekennzeichnet, daß in jedem der Sektoren eine Anzahl von Zahngliedern (6) aus dem härteren und verschleißfesteren Material angeordnet ist, wobei jedes der Zahnglieder (6) eine Anzahl von Zähnen (61) aufweist.

6. Tretkurbelanordnung nach Anspruch 4 oder 5, dadurch gekennzeichnet, daß die Gruppen oder Zahnglieder (6) voneinander in Abständen von mindestens zwei Zähnen (11a) angeordnet sind.

7. Tretkurbelanordnung nach Anspruch 6, dadurch gekennzeichnet, daß mindestens einige der Gruppen oder Zahnglieder (6) voneinander in Abständen von drei Zähnen (11a) angeordnet sind.

8. Tretkurbelanordnung nach einem der Ansprüche 1 bis 7, dadurch gekennzeichnet, daß die Zähne (61) aus härterem oder verschleißfesterem Material lösbar an dem Körper (12) des Kettenrades (1) größeren Durchmessers befestigt sind.

# FIG. I

FIG.2

FIG.3 FIG.4 FIG.5 FIG.6